# EUROPÄISCHE PATENTANMELDUNG

(11) **EP 2 491 828 A1**
(43) Veröffentlichungstag der Anmeldung: **29.08.2012**
(21) Anmeldenummer: 12151571.2
(22) Anmeldetag: 18.01.2012
(51) Int. Cl.: A47F 3/04

(54) **Vorrichtung zum Kühlen verderblicher Güter, insbesondere Kühltheke oder Kühlvitrine**

(30) Priorität: 25.02.2011 AT 1142011
(71) Anmelder: AKE Ausseer Kälte- & Edelstahltechnik GmbH, 8984 Kainisch (AT)
(72) Erfinder: Pilz, Helmut, 8992 Altausee (AT)
(74) Vertreter: Hübscher, Helmut

(57) **Zusammenfassung**

Es wird eine Vorrichtung zum Kühlen verderblicher Güter, insbesondere Kühltheke oder Kühlvitrine (1), mit einem vorzugsweise auf einem Maschinengehäuse (2) angeordneten Aufbau (3) zur Aufnahme der Güter gegebenenfalls in Regalen (4) beschrieben, welcher Aufbau (3) zwei einen Kühlraum aufspannende Seitenwände (5), eine Rückwand (6), ein Kopfteil (7) und frontseitige, mit Entnahmeklappen (8) verschließbare, Entnahmeöffnungen aufweist, wobei Maschinengehäuse (2) und Kühlraum Einrichtungen zum Führen gekühlter Luft über Kühlbereiche (9) aufweisen. Um vorteilhafte Präsentationsverhältnisse zu schaffen, wird vorgeschlagen, dass den den Kühlbereich nach vorne abschließenden Entnahmeklappen (8) außenseitig im Bereich des Kopfteils (7) eine Belüftungseinrichtung (11 ) mit einer Luftführung vorgesehen ist, die zumindest bei geschlossenen Entnahmeklappen (8) einen sich über die Entnahmeklappen (8) legenden Luftvorhang (12) ausbildet.

## Beschreibung

Die Erfindung betrifft eine Vorrichtung zum Kühlen verderblicher Güter, insbesondere eine Kühltheke oder eine Kühlvitrine, mit einem vorzugsweise auf ein Maschinengehäuse aufsetzbaren Aufbau zur Aufnahme der Güter gegebenenfalls in Regalen, welcher Aufbau zwei einen Kühlraum aufspannende Seitenwände, eine Rückwand, ein Kopfteil und frontseitige, mit Klappen verschließbare, Entnahmeöffnungen aufweist, wobei das Maschinengehäuse und der Kühlraum Einrichtungen zum Führen gekühlter Luft über Kühlbereiche aufweisen.

Derartige Kühlgeräte, insbesondere Kleinkühlgeräte werden in Selbstbedienungsbereichen beispielsweise in Buffets, Mensen, Geschäften od. dgl. platziert, um gekühlte Lebensmittel feilzubieten. Daraus ergibt sich die Anforderung an den Aufbau derartiger Vorrichtungen, dass eine gute Präsentation von verderblichen Gütern bei maximaler Sicherheit hinsichtlich der einzuhaltenden Kühltemperatur bei guter Ausleuchtung der Kühlbereiche sichergestellt ist. Solche Vorrichtungen, die eine ordnungsgemäße Lagerung verderblicher Güter gewährleisten setzen die Kühlluft im Kühlraumaufbau meist mit Ventilatoren um. Kühlaggregate und Ventilatoren sind bevorzugt in einem im Bodenbereich vorgesehenen Maschinengehäuse platzsparend untergebracht. Auf diesem Maschinengehäuse ist der die verderblichen Güter aufnehmende Aufbau angeordnet.

Verkaufsvitrinen sind üblicherweise für definierte Umgebungsbedingungen von rund 25 °C Raumtemperatur bei einer relativen Luftfeuchtigkeit von max. 60 % ausgelegt. Bei diesen Bedingungen sollten 5 °C Innentemperatur garantiert werden können. Bei geringerer Innentemperatur, höherer Umgebungstemperatur oder höherer Luftfeuchtigkeit, bildet sich Kondenswasser, dass sich an den Entnahmeöffnungen niederschlägt. Um dieses Beschlagen der Frontscheiben durch den Temperaturunterschied zwischen Außen- und Innenseite im Bereich der frontseitigen Entnahmeklappen zu verhindern kann eine Belüftung der Außenseite der frontseitigen Entnahmeklappen vorgesehen sein.

Dazu wird beispielsweise bodenseitig der Entnahmeöffnung an der Vorrichtungsaußenseite eine sich über die Kühlvitrinenlängsrichtung erstreckende Belüftungseinrichtung vorgesehen, über die Luft derart gegen die Frontscheibe geleitet wird, dass die Luft die Frontscheibe hochsteigt und dabei sich gegebenenfalls an der Frontscheibe niedergesetzte Feuchtigkeit aufnimmt und abtransportiert bzw. ein Beschlagen der Scheibe verhindert. Von Nachteil ist bei derartigen Vorrichtungen insbesondere, dass durch die im Bereich der Kühlmaschinenfront aufsteigende Strömung unerwünschte Raumströmungen verursacht werden. Zu diesem Zweck kann die Abwärme des Kühlaggregates über die Frontscheibe geleitet werden.

Ausgehend von einem Stand der Technik der eingangs geschilderte Art liegt der Erfindung die Aufgabe zugrunde, eine Vorrichtung zum Kühlen verderblicher Güter zu schaffen, die bei verbessertem Wirkungsgrad eine Bildung von Kondenswasser an den Entnahmeöffnungen mit hoher Sicherheit vermeidet.

Die Erfindung löst diese Aufgabe dadurch, dass den den Kühlbereich nach vorne abschließenden Entnahmeklappen außenseitig im Bereich des Kopfteils eine Belüftungseinrichtung mit einer Luftführung vorgesehen ist, die zumindest bei geschlossenen Entnahmeklappen einen sich über die Entnahmeklappen legenden Luftvorhang ausbildet.

Erfindungsgemäß ist es somit vorgesehen im Bereich des Kopfteils eine Belüftungseinrichtung anzuordnen, die einen gezielten Luftstrom in Form eines Luftvorhanges über die Entnahmeklappen hinweg ausbildet. Die sich beim Abwärtsströmen an den Entnahmeklappen abkühlende und Feuchtigkeit aufnehmende Luft erhöht dabei ihre Dichte und sinkt aufgrund physikalischer Gegebenheiten den vorgegebenen Luftstrom unterstützend als Luftvorhang ab. Im Gegensatz zum Stand der Technik, nachdem üblicherweise vorgewärmte Luft von unten nach oben über die Entnahmeklappen hinwegströmt, sollen mit der Erfindung die physikalischen Gegebenheiten an der Kühlmaschinenfront bestmöglich ausgenützt werden, ohne eine Heizung für die Belüftung vorsehen zu müssen. So ist es insbesondere vorgesehen, Umgebungsluft in der vorgeschlagenen Weise über die Entnahmeöffnungen zu leiten. Mit der Erfindung wird eine Kondensation an den, beispielsweise aus Plexiglas, Glas oder dgl., gefertigten Entnahmeklappen durch den Luftvorhang sicher vermieden.

Zur Schaffung besonders kompakter und einfacher Konstruktionsverhältnisse wird vorgeschlagen, dass das das Kopfteil einen Strömungskanal mit wenigstens einem Gebläse aufweist, das Umgebungsluft über eine rückseitige Ansaugöffnung ansaugt und über eine frontseitige zumindest annähernd parallel zur Kühlraumfrontoberfläche ausgerichtete Belüftungsöffnung über die Kühlraumfrontoberfläche leitet. Ob zu diesem Zweck ein oder mehrere, beispielsweise parallel geschaltete Gebläse vorgesehen sind, obliegt dem Fachmann, der sich üblicherweise an den baulichen Gegebenheiten zu orientieren hat. Die Anzahl der Gebläse ist zudem von der Förderleistung abhängig. Ob an der Kühlraumfront eine oder mehrere Belüftungsöffnungen vorgesehen sind, obliegt ebenfalls dem Fachmann.

Besonders von Vorteil ist es, wenn das das Gebläse wenigstens einen, gegebenenfalls um eine horizontale Achse geneigten, im Strömungskanal nahe der rückseitigen Ansaugöffnung angeordneten Axiallüfter umfasst. Axiallüfter haben in diesem Zusammenhang einen Vorteil, dass sie besonders geräuscharm bei ausreichender Förderleistung betrieben werden können. Um auch bei beengten Bauverhältnissen, insbesondere bei geringeren Strömungskanalhöhen dennoch größere Lüfter verwenden zu können, kann es sich empfehlen, die Axiallüfter um eine horizontale Achse geneigt im Strömungskanal anzuordnen.

Um ein Eindringen des über die Entnahmeklappen geleiteten Luftvorhangs in den Kühlraum zu vermeiden, empfiehlt es sich, wenn die Entnahmeklappen um horizontale, im Bereich der Entnahmeklappenoberseite angeordnete Achsen verschwenkbar in der Kühlraumfront gelagert sind. Durch diese Maßnahme wird ein Eindringen von Luft in den Kühlbereich bei geöffneten Entnahmeklappen zumindest in weiten Bereichen vermieden.

Üblicherweise ist die Rückwand mit Türen verschließbar bzw. wird die Rückwand von Türen gebildet und ist der Kühlraum nach Art einer Durchreiche ausgebildet, womit die Vorrichtung auch im laufenden Betrieb stets nachgefüllt werden kann. Verjüngt sich der Strömungskanalquerschnitt zur Belüftungsöffnung hin, so kann durch die sich dadurch ergebende Düsenwirkung zudem gezielt die Strömung des Luftvorhangs beeinflusst und ausgerichtet werden. Zur Verbesserung des Wirkungsgrades der Vorrichtung können die Entnahmeklappen zusätzlich mit einer Isolierverglasung ausgestattet sein. Zwecks Erzielung vorteilhafter Konstruktionsverhältnisse ist beispielsweise im Bereich der Rückwand ein vom Maschinengehäuse her mit Kühlluft beaufschlagbarer Kühlluftkanal vorgesehen, der über die Regale zu den einzelnen Kühlbereichen ausmündet, von welchen die Kühlluft im Bereich der Kühlraumfrontinnenseite unter Ausbildung eines Kühlvorhanges in Richtung Maschinengehäuse strömt.

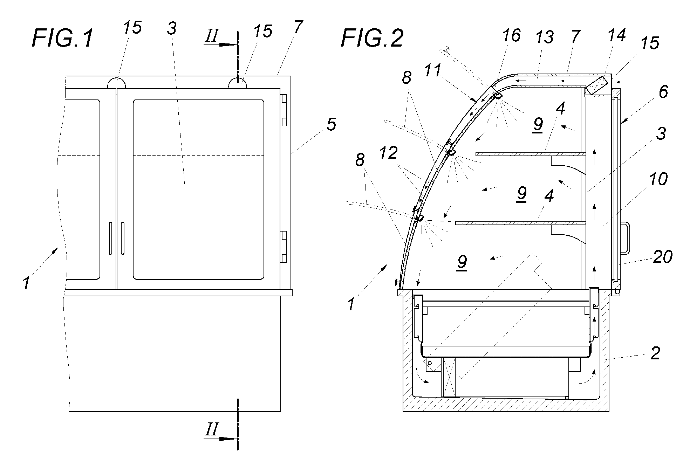

In der Zeichnung ist die Erfindung anhand eines Ausführungsbeispiels schematisch dargestellt. Es zeigen
Fig. 1 einen Ausschnitt einer erfindungsgemäßen Vorrichtung in Rückansicht,
Fig. 2 die Vorrichtung aus Fig. 1 in einem Schnitt nach der Linie II-II und
Fig. 3 eine vergrößerte Darstellung des Kopfteils aus Fig. 2 im Querschnitt.

Die in der Zeichnung vorgestellte Vorrichtung zum Kühlen verderblicher Güter, nämlich eine Kühlvitrine 1, umfasst einen auf einem Maschinengehäuse 2 angeordneten Aufbau 3 zur Aufnahme verderblicher Güter in Regalen 4. Der Aufbau 3 umfasst zwei einen Kühlraum aufspannenden Seitenwände 5, eine Rückwand 6, mit die Rückwand 6 verschließenden Türen, ein Kopfteil 7 und frontseitige, mit Entnahmeklappen 8 verschließbare, Entnahmeöffnungen. Das Maschinengehäuse 2 und der Kühlraum weisen Einrichtungen zum Führen gekühlter Luft über Kühlbereiche 9 auf, welche Kühlluft mit Pfeilen angedeutet ist. Die Einrichtungen zum Führen gekühlter Luft sind im dargestellten Ausführungsbeispiel die Regale 4 und das Kopfteil 7.

Im Bereich der Rückwand 3 ist ein vom Maschinengehäuse 2 mit Kühlluft beaufschlagbarer Kühlluftkanal 10 vorgesehen, der über die Regale 4 zu den einzelnen Kühlbereichen 9 ausmündet, von welchen Kühlluft im Bereich der Kühlraumfrontinnenseite unter Ausbildung eines Kühlluftvorhangs wieder nach unten in Richtung des Maschinengehäuses 2 strömt.

Erfindungsgemäß ist den den Kühlbereich nach vorne abschließenden Entnahmeklappen 8 außenseitig im Bereich des Kopfteils 7 eine Belüftungseinrichtung 11 mit einer Luftführung vorgesehen, die zumindest bei geschlossenen Entnahmeklappen 8 einen sich über die Entnahmeklappen 8 von der Vorrichtungsoberseite zum Maschinengehäuse 2 hin legenden Luftvorhang 12 bewirkt. Dazu weist das Kopfteil 7 einen Strömungskanal 13 mit mehreren Gebläsen 14 auf, welche Gebläse 14 Umgebungsluft über rückseitige Ansaugöffnungen 15 ansaugt und über eine frontseitige, zumindest annähernd zur Kühlraumfrontoberfläche ausgerichtete, Belüftungsöffnung 16 über die Kühlraumfrontoberfläche leitet.

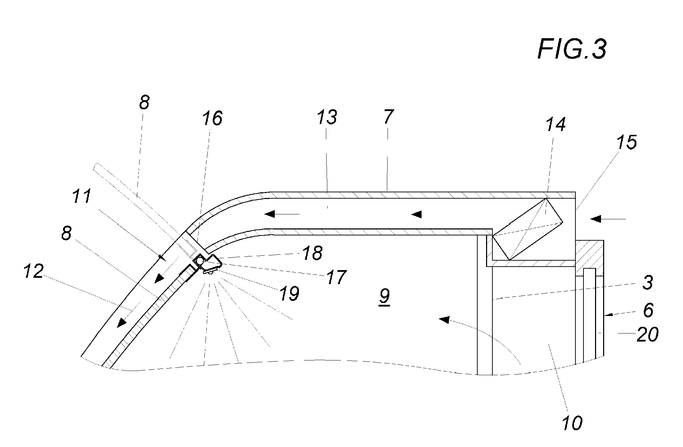

Wie beispielsweise Fig. 3 entnommen werden kann, umfasst das Gebläse 14 einen um eine horizontale Achse geneigten, im Strömungskanal 13 nahe der rückseitigen Ansaugöffnung 15 angeordneten Axiallüfter. Die Entnahmeklappen 8 sind um ebenfalls horizontale, im Bereich der Entnahmeklappenoberseite angeordnete Achsen 17 verschwenkbar in der Kühlraumfront gelagert. Zur Lagerung sind im dargestellten Ausführungsbeispiel Profile 18 vorgesehen, die zudem eine Beleuchtungseinrichtung 19, die insbesondere LED-Leuchtschienen tragen.

Im dargestellten Ausführungsbeispiel wird die Rückwand 6 von den Türen 20 gebildet. Zur Ausbildung einer Düse verengt sich der Strömungskanalquerschnitt zur Belüftungsöffnung 16 hin.

## Patentansprüche

1. Vorrichtung zum Kühlen verderblicher Güter, insbesondere Kühltheke oder Kühlvitrine (1), mit einem vorzugsweise auf einem Maschinengehäuse (2) angeordneten Aufbau (3) zur Aufnahme der Güter gegebenenfalls in Regalen (4), welcher Aufbau (3) zwei einen Kühlraum aufspannende Seitenwände (5), eine Rückwand (6), ein Kopfteil (7) und frontseitige, mit Entnahmeklappen (8) verschließbare, Entnahmeöffnungen aufweist, wobei Maschinengehäuse (2) und Kühlraum Einrichtungen zum Führen gekühlter Luft über Kühlbereiche (9) aufweisen, **dadurch gekennzeichnet, dass** den den Kühlbereich nach vorne abschließenden Entnahmeklappen (8) außenseitig im Bereich des Kopfteils (7) eine Belüftungseinrichtung (11) mit einer Luftführung vorgesehen ist, die zumindest bei geschlossenen Entnahmeklappen (8) einen sich über die Entnahmeklappen (8) legenden Luftvorhang (12) ausbildet.

2. Vorrichtung nach Anspruch 1, **dadurch gekennzeichnet, dass** das Kopfteil (7) einen Strömungskanal (13) mit wenigstens einem Gebläse (14) aufweist, das Umgebungsluft über eine rückseitige Ansaugöffnung (15) ansaugt und über eine frontseitige zumindest annähernd parallel zur Kühlraumfrontoberfläche ausgerichtete Belüftungsöffnung (16) über die Kühlraumfrontoberfläche leitet.

3. Vorrichtung nach Anspruch 2, **dadurch gekennzeichnet, dass** das Gebläse (14) wenigstens einen, gegebenenfalls um eine horizontale Achse geneigten, im Strömungskanal (13) nahe der rückseitigen Ansaugöffnung (15) angeordneten Axiallüfter umfasst.

4. Vorrichtung nach einem der Ansprüche 1 bis 3, **dadurch gekennzeichnet, dass** die Entnahmeklappen (8) um horizontale, im Bereich der Entnahmeklappenoberseite angeordnete Achsen (17) verschwenkbar in der Kühlraumfront gelagert sind.

5. Vorrichtung nach einem der Ansprüche 1 bis 4, **dadurch gekennzeichnet, dass** die Rückwand (6) mit Türen verschließbar und der Kühlraum nach Art einer Durchreiche ausgebildet ist.

6. Vorrichtung nach einem der Ansprüche 2 bis 5, **dadurch gekennzeichnet, dass** der Strömungskanalquerschnitt sich zur Belüftungsöffnung (16) hin verjüngt.

7. Vorrichtung nach einem der Ansprüche 1 bis 6, **dadurch gekennzeichnet, dass** die Entnahmeklappen (8) mit einer Isolierverglasung ausgestattet sind.

8. Vorrichtung nach einem der Ansprüche 1 bis 7, **dadurch gekennzeichnet, dass** im Bereich der Rückwand (3) ein vom Maschinengehäuse (2) her mit Kühlluft beaufschlagbarer Kühlluftkanal (10) vorgesehen ist, der über die Regale (4) zu den einzelnen Kühlbereichen (9) ausmündet, von welchen die Kühlluft im Bereich der Kühlraumfrontinnenseite unter Ausbildung eines Kühlluftvorhangs in Richtung Maschinengehäuse (2) strömt.
